# FASCICULE DE BREVET EUROPEEN

(11) **EP 3 891 600 B1**
(45) Date de publication et mention de la délivrance du brevet: **03.05.2023**
(21) Numéro de dépôt: 19806291.1
(22) Date de dépôt: 27.11.2019
(51) Int. Cl.: G06F 8/65

(54) **PROCÉDÉ ET DISPOSITIF DE GESTION DE CONFIGURATIONS LOGICIELLES D'ÉQUIPEMENTS D'UN AÉRONEF**
VERFAHREN UND VORRICHTUNG ZUR VERWALTUNG VON SOFTWARE-KONFIGURATIONEN VON AUSRÜSTUNGEN EINES FLUGZEUGS
METHOD AND DEVICE FOR MANAGING SOFTWARE CONFIGURATIONS OF EQUIPMENT OF AN AIRCRAFT

(30) Priorité: 03.12.2018 FR 1872245
(43) Date de publication de la demande: 13.10.2021
(73) Titulaire: Safran Electronics & Defense, 75015 Paris (FR)
(72) Inventeur: DELVILLE, Denis, 92100 BOULOGNE BILLANCOURT (FR); THIRION, Louis Théophile, 92100 BOULOGNE BILLANCOURT (FR); MONOT, Thomas, 92100 BOULOGNE BILLANCOURT (FR)
(74) Mandataire: Cabinet Le Guen Maillet
(86) Numéro de dépôt international: PCT/EP2019/082726
(87) Numéro de publication internationale: WO 2020/114855

(56) Documents cités:
- EP-A1- 2 881 859
- FR-A1- 2 987 145
- US-A1- 2014 059 534
- US-B1- 6 438 468

## Description

### DOMAINE TECHNIQUE

La présente invention concerne un procédé et un dispositif de transmission d'un paquet comportant au moins une information identifiant un émetteur dans un réseau Ad-Hoc de véhicules (Ad-Hoc Network ou VANET ou MANET en anglais), pour fournir des communications au sein d'un groupe de véhicules à portée les uns des autres et entre les véhicules et les équipements fixes à portée, usuellement appelés équipements de la route,

### ETAT DE LA TECHNIQUE ANTERIEURE

Un VANET peut être utilisé pour soutenir le développement des Systèmes de Transport Intelligent STI (Intelligent Transportation Systems ITS en anglais).

De nombreuses applications sont proposées pour les VANET telles que l'alerte précoce et la prévention des accidents, les meilleurs itinéraires vers la destination, la réduction de la congestion, la prévention des embouteillages, l'accès Internet, les véhicules autonomes et les applications peer-to-peer. La conception et la mise en oeuvre de protocoles, d'applications et de systèmes pour les VANET nécessitent de considérer ces caractéristiques distinctives, en particulier la grande mobilité des véhicules, le changement rapide de la topologie et le chemin prévu. En outre, il doit également tenir compte de plusieurs facteurs, tels que l'exigence de qualité, en particulier pour la transmission de messages d'alerte.

La demande de brevet US 2014/059534 divulgue un système de mise à jour de logiciel. La demande de brevet FR 2987145 divulgue la mise à jour de données dans une application logicielle opérationnellement approuvée d'un aéronef.

Pour 1a qualité de transmission, les collisions entre plusieurs messages posent un problème important. La collision entre deux messages génère des problèmes, pour le récepteur, d'identification des émetteurs ayant émis les messages.

Les messages d'alerte doivent être décodés rapidement et sûrement.

Le format des paquets de données tels que proposés dans l'état de la technique ne permet pas une identification rapide et fiable d'un émetteur émettant un paquet de données pour lequel une collision avec plusieurs autres paquets de données apparaît.

### EXPOSE DE L'INVENTION

Un objet de la présente invention est de proposer un procédé et un dispositif de transmission d'un paquet comportant au moins une information identifiant un émetteur dans un réseau Ad-Hoc de véhicules qui permette de décoder le paquet de données même si celui-ci entre en collision à la réception avec d'autres paquets de données émis par d'autres émetteurs.

A cet effet, il est proposé un procédé de transmission d'un paquet comportant au moins une information identifiant un émetteur dans un réseau Ad-Hoc, le paquet étant destiné à
- vérification si un fichier de configuration est disponible et import du fichier de configuration,
- import depuis le serveur au sol d'une ou plusieurs mises à jour logicielles identifiées dans le fichier de configuration et mémorisation de la ou des mises à jour logicielles dans un espace de mémorisation temporaire,
- détermination de l'instant à partir duquel chaque mise à jour peut être effectuée,
- commande de la modification de la configuration logicielle du ou des équipements avec la ou les mises à jour logicielles correspondant à ou aux équipements.

L'invention concerne aussi un dispositif de gestion de configurations logicielles d'équipements d'un aéronef, caractérisé en ce que le dispositif de gestion de configurations logicielles d'équipements de l'aéronef est compris dans l'aéronef et comporte :
- des moyens de détection de la disponibilité d'un lien de communication en entre un serveur au sol et l'aéronef,
- des moyens de vérification si un ou plusieurs fichier de configuration sont disponibles et d'import du ou des fichiers de configuration,
- des moyens d'import depuis le serveur au sol d'une ou plusieurs mises à jour logicielles identifiées dans le ou les fichiers de configuration et mémorisation de la ou les mises à jour logicielles dans un espace de mémorisation temporaire,
- des moyens de détermination de l'instant à partir duquel chaque mise à jour peut être effectuée,
- des moyens de commande de la modification de la configuration logicielle du ou des équipements avec la ou les mises à jour logicielles correspondant à ou aux équipements.

Ainsi, il est possible de réaliser des mises à jour logicielles de manière automatique, à distance, en réduisant l'intervention humaine, qui soient très fiables en terme de sécurité informatique et qui puissent être à l'initiative d'un fournisseur d'équipements ou de logiciels et/ou du fournisseur de l'aéronef et/ou de l'exploitant de l'aéronef et/ou le responsable de la maintenance de l'aéronef, sur tout ou seulement un ensemble préalablement défini d'équipements.

Selon un mode particulier, le fichier de configuration comporte une signature numérique garantissant l'intégrité, l'authenticité et la provenance des données, des identifiants des équipements de l'aéronef qui doivent être mis à jour, la version de la mise à jour devant être effectuée pour les équipements et la date à la laquelle la mise à jour peut être effectuée.

Ainsi, il est possible de sécuriser les mises à jour logicielles.

Selon un mode particulier, le procédé comporte en outre les étapes d'obtention d'informations identifiant la ou des mises à jour logicielles et de comparaison avec les informations contenues dans le fichier de configuration.

Ainsi, il est possible d'identifier la ou les versions logicielles qui viennent d'être mise à jour, et de la ou les comparer aux informations identifiant la ou des mises à jour logicielle comprises dans le fichier de configuration pour en sortir un état de complétude, et éventuellement de bon pour vol.

Selon un mode particulier, le fichier de configuration est généré par un fournisseur d'équipements ou de logiciels et/ou par un fournisseur de l'aéronef et/ou par un exploitant de l'aéronef et/ou par un responsable de la maintenance de l'aéronef, sur tout ou seulement un ensemble préalablement défini des équipements.

Selon un mode particulier, le fichier de configuration comporte en outre des informations représentatives de la compatibilité entre les versions des mises à jour de tous les équipements de l'aéronef, et/ou la liste des lieux où le transfert des mises à jour pourra être effectué et/ou la qualité du lien de communication entre le lieu de la mise à jour et l'aéronef et/ou le coût de la communication pour chaque lieu où l'import des mises à jour pourra être effectué.

Ainsi la présente invention permet d'optimiser le moment et le lieu de l'import de la ou des mises à jour logicielles des équipements.

Selon un mode particulier, la commande de la modification de la configuration logicielle du ou des équipements avec la ou les mises à jour logicielles correspondant à ou aux équipements est effectuée à partir d'une table d'adressage comprenant des informations identifiant chaque équipement et une adresse de chaque équipement comportant un logiciel pour chaque équipement, une information indiquant si une signature numérique garantissant l'intégrité, l'authenticité et la provenance des données est nécessaire pour la mise à jour logicielle de l'équipement.

Ainsi, la présente invention permet d'effectuer les mises à jour logicielles de manière sécurisée au sens sécurité informatique et sûre au sens sureté du vol.

Selon un mode particulier, si une signature numérique garantissant l'intégrité, l'authenticité et la provenance des données est nécessaire pour la mise à jour logicielle de l'équipement, la table d'adressage comporte des informations identifiant la ou les entités ayant l'autorisation de fournir une ou des mises à jour logicielle.

Ainsi, la présente invention permet d'effectuer de manière sécurisée au sens sécurité informatique et sûre au sens sureté du vol les mises à jour logicielles.

Selon un mode particulier, la table comprend des informations indiquant le ou les états de fonctionnement de chaque équipement ou de l'aéronef dans lequel ou lesquels une mise à jour logicielle peut être effectuée.

Ainsi, la présente invention permet d'effectuer de manière sécurisée au sens sûreté du vol les mises à jour logicielles.

Selon un mode particulier, la table d'adressage est installée dans l'aéronef lors de la maintenance de l'aéronef.

Selon un mode particulier, la table d'adressage est créée par le dispositif de gestion de configurations logicielles en diffusant un message de découverte à destination de tous les équipements de l'aéronef et à partir de l'analyse de messages reçus d'équipements en réponse au message de découverte et/ou en utilisant des valeurs par défaut en cas de non réponse ou de réponse partielle d'au moins un équipement de l'aéronef.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente une vue schématique d'un système de gestion de configurations logicielles d'équipements d'un aéronef dans lequel la présente invention est implémentée ;
[Fig. 2] représente un exemple d'architecture d'un dispositif de gestion de configurations logicielles d'équipements d'un aéronef selon la présente invention ;
[Fig. 3] représente un exemple d'algorithme exécuté par le dispositif de gestion de configurations logicielles d'équipements d'un aéronef selon la présente invention.

### EXPOSE DETAILLE DE MODES DE REALISATION

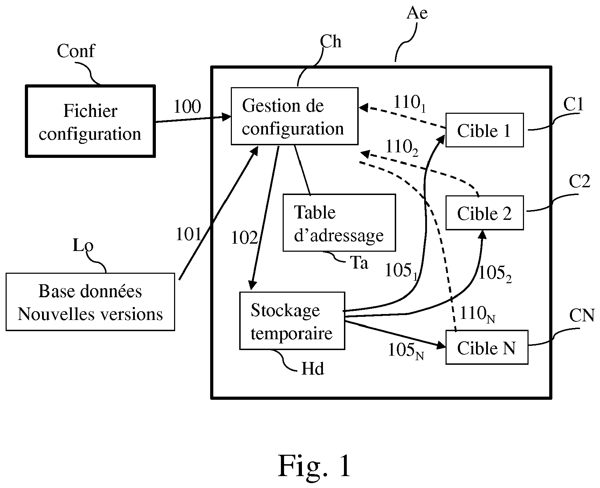

La Fig. 1 montre une vue schématique d'un système de gestion de configurations logicielles d'équipements d'un aéronef qui comporte au sol un fichier de configuration Conf, une base de données Lo comportant de nouvelles configurations logicielles et, à bord, d'un aéronef Ae, un dispositif de gestion de configurations logicielles Ch d'équipements de l'aéronef Ae qui gère la mise à jour d'équipements C1 à CN à l'aide d'une table d'adressage Ta et de moyens de stockage temporaires Hd.

Le fichier de configuration Conf répertorie tous les identifiants des équipements C1 à CN de l'aéronef Ae qui doivent être mis à jour, la version de la mise à jour ou les versions des mises à jour devant être effectuée pour les équipements C1 à CN, des informations représentatives de la compatibilité entre les versions des mises à jours de tous les équipements C1 à CN de l'aéronef Ae, la date à partir de laquelle la mise à jour pourra être effectuée et éventuellement la liste des lieux où l'import des mises à jour pourra être effectué, la qualité du lien de communication entre le lieu de la mise à jour et l'aéronef, le coût de la communication pour chaque lieu où le transfert des mises à jour pourra être effectué. Le fichier de configuration Conf est par exemple généré par le fournisseur d'un ou plusieurs équipements ou de logiciels de l'aéronef Ae et/ou du fournisseur de l'aéronef et/ou de l'exploitant de l'aéronef et/ou le responsable de la maintenance de l'aéronef, sur tout ou seulement un ensemble préalablement défini des équipements de l'aéronef.

Il est à remarquer ici que dans un mode de réalisation particulier, plusieurs fichiers de configurations sont créés de manière à classifier les mises à jour des équipements de l'aéronef selon des critères prédéfinis comme par exemple le niveau de criticité des équipements vis-à-vis de la sécurité ou de la sureté.

Le ou les fichiers de configuration sont par exemple générés selon un calendrier de maintenance des équipements de l'aéronef. Le ou chaque fichier de configuration comporte par exemple une signature numérique garantissant l'intégrité, l'authenticité et la provenance des données du fournisseur d'un ou plusieurs équipements ou d'au moins un logiciel de l'aéronef Ae et/ou du fournisseur de l'aéronef et/ou de l'exploitant de l'aéronef et/ou du responsable de la maintenance de l'aéronef, sur tout ou seulement un ensemble préalablement défini des équipements.

La base de données Lo comporte les fichiers de mise à jour logicielle des équipements. Chaque mise à jour logicielle est par exemple signée par le fournisseur d'un ou plusieurs équipements ou de logiciels de l'aéronef Ae et/ou par le fournisseur de l'aéronef et/ou par l'exploitant de l'aéronef et/ou par le responsable de la maintenance de l'aéronef.

Périodiquement, par exemple lorsque l'aéronef Ae est au sol ou qu'un lien de communication existe entre l'aéronef et un serveur au sol, le dispositif de gestion de configurations logicielles Ch d'équipements de l'aéronef Ae vérifie si un fichier de configuration est disponible par un moyen de communication. Dans l'affirmative, le dispositif de gestion de configurations logicielles Ch importe le fichier de configuration comme indiqué par la flèche notée 100.

Le dispositif de gestion de configurations logicielles Ch vérifie si la signature numérique garantissant l'intégrité, l'authenticité et la provenance des données comprise dans le fichier de configuration téléchargé est correcte, c'est-à-dire qu'elle correspond au fournisseur de ou des équipements ou de logiciels identifiés dans le fichier de configuration et/ou au fournisseur de l'aéronef et/ou à l'exploitant de l'aéronef et/ou à un responsable de la maintenance de l'aéronef.

Dans l'affirmative, le dispositif de gestion de configurations logicielles Ch, en utilisant la table d'adressage Ta, compare, pour chaque équipement comportant un logiciel identifié dans le fichier de configuration téléchargé, la version de la mise à jour comprise dans le fichier de configuration avec la version du logiciel actuellement installée dans l'équipement.

Si au moins une version de mise à jour comprise dans le fichier de configuration est différente d'une version du logiciel actuellement installée dans un équipement, un import de la mise à jour est programmé.

La programmation de l'import de la mise à jour dépend de la date comprise dans le fichier de configuration, du lieu où lequel l'aéronef se trouve, de la qualité du lien de communication entre le lieu de la mise à jour et l'aéronef, du coût de la communication au lieu auquel l'aéronef se trouve.

Lorsque qu'un lien de communication existe entre l'aéronef et un serveur au sol à la date de la mise à jour ou après la date de la mise à jour, le dispositif de gestion de configurations logicielles Ch procède à l'import noté 101 en Fig. 1 du ou des logiciels de mises à jour. Le ou les logiciels de mises à jour sont importés de la base de données Lo qui comporte les fichiers de mises à jour logicielles des équipements.

Le dispositif de gestion de configurations logicielles Ch vérifie si la signature numérique garantissant l'intégrité, l'authenticité et la provenance des données de chaque mise à jour correspond à celle de l'entité qui a autorisation pour générer et demander l'installation d'une mise à jour logicielle et lorsque la vérification est positive, le ou les fichiers téléchargés sont mémorisés dans les moyens de stockage temporaires Hd. La mémorisation dans les moyens de stockage temporaires Hd est représentée par la flèche 102.

Le dispositif de gestion de configurations logicielles Ch procède ensuite au téléchargement de chaque mise à jour dans l'équipement comportant un logiciel concerné.

Chaque équipement vérifie si la mise à jour lui est effectivement destinée et procède à l'installation de la mise à jour logicielle si l'équipement comportant un logiciel est dans un état de fonctionnement qui permet l'installation de la mise à jour.

Les installations des mises à jour sont représentées par les flèches notées 105₁ à 105_{N} en Fig. 1.

Lorsque la mise à jour logicielle est effectuée, l'équipement comportant un logiciel ayant fait la mise à jour transfère un message noté 110₁ à 110_{N} au dispositif de gestion de configurations logicielles Ch lui indiquant la version de mise à jour installée.

Le dispositif de gestion de configurations logicielles Ch vérifie si chaque équipement comportant un logiciel identifié dans le fichier de configuration Conf a installé la version de la mise à jour comprise dans le fichier de configuration Conf.

Dans un mode particulier de réalisation, lorsque chaque équipement comportant un logiciel identifié dans le fichier de configuration Conf a installé la version de la mise à jour comprise dans le fichier de configuration Conf, le dispositif de gestion de configurations logicielles Ch transfère au sol sur un serveur la configuration logicielle des équipements de l'aéronef.

Si toutes les mises à jour sont effectuées et qu'elles sont compatibles entre elles et/ou avec la ou les mises à jour décrites dans le fichier de configuration, le dispositif de gestion de configurations logicielles Ch détermine que l'aéronef Ae peut être autorisé à voler.

Il est à remarquer ici que la détermination que l'aéronef Ae peut être autorisé à voler pourra être faite au sol aussi, étant donné que le dispositif de gestion de configurations logicielles Ch y a transféré la version logicielle de chaque équipement.

De même, l'autorisation de vol pourra être validée par un opérateur de maintenance, à bord ou au sol.

La table d'adressage Ta comprend les informations identifiant chaque équipement comportant un logiciel de l'aéronef et l'adresse de chaque équipement comportant un logiciel de l'aéronef, qui est susceptible d'être mis à jour. La table d'adressage comprend optionnellement, pour chaque équipement et/ou logiciel, une information indiquant si une signature numérique garantissant l'intégrité, l'authenticité et la provenance des données est nécessaire pour la mise à jour logicielle de l'équipement. Si une signature numérique garantissant l'intégrité, l'authenticité et la provenance des données est nécessaire pour la mise à jour logicielle de l'équipement, la table d'adressage Ta peut éventuellement comprendre les identifiants des entités qui ont la possibilité de fournir une mise à jour logicielle. Ces entités pourraient être le fournisseur de l'équipement comportant un logiciel et/ou un fournisseur de logiciel et/ou par un fournisseur de l'aéronef et/ou par un exploitant de l'aéronef et/ou par un responsable de la maintenance de l'aéronef. Dans le cas où la table d'adressage Ta ne comprend pas les identifiants des entités qui ont la possibilité de fournir une mise à jour logicielle, toute entité qui est capable de signer numériquement la mise à jour logicielle aura la possibilité de fournir une mise à jour logicielle.

La table d'adressage Ta comprend des informations indiquant le ou les états de fonctionnement de chaque équipement comportant un logiciel dans lequel ou lesquels une mise à jour logicielle peut être effectuée. L'état est par exemple un état lié à la situation de l'aéronef, telle que par exemple, une phase de vol, ou de présence au sol. L'état de fonctionnement est par exemple le fait que les moteurs soient à l'arrêt ou non.

La table d'adressage Ta est par exemple générée au sol et installée lors de la maintenance de l'aéronef Ae ou est créée dynamiquement par le dispositif de gestion de configurations logicielles Ch. Par exemple, le dispositif de gestion de configurations logicielles Ch diffuse un message de découverte à destination de tous les équipements de l'aéronef.

Chaque équipement comportant un logiciel qui est susceptible d'être mis à jour, recevant le message de découverte, émet en réponse un message au dispositif de gestion de configurations logicielles Ch. Le message émis en réponse comprend des informations l'identifiant et l'adresse de l'équipement comportant un logiciel ou des logiciels de l'aéronef, une information indiquant si une signature numérique garantissant l'intégrité, l'authenticité et la provenance des données est nécessaire pour la mise à jour logicielle de l'équipement. Si une signature numérique garantissant l'intégrité, l'authenticité et la provenance des données est nécessaire pour la mise à jour logicielle de l'équipement, le message émis en réponse comprend les identifiants des entités qui ont la possibilité de fournir une mise à jour logicielle. Ces entités pourraient être le fournisseur de l'équipement comportant un logiciel ou des tiers, si ceux-ci sont autorisés à effectuer une mise à jour logicielle sur ce calculateur.

Selon un mode particulier le message émis en réponse comprend aussi l'état ou les états dans lesquels l'équipement comportant un logiciel doit être lors d'une mise à jour logicielle.

Selon un mode particulier de la présente invention, la table d'adressage Ta comporte des informations prédéfinies qui sont utilisées en cas d'incapacité d'un équipement comportant un logiciel à traiter un message de découverte, ou à fournir dans le message de réponse toutes les informations cités ci-dessus.

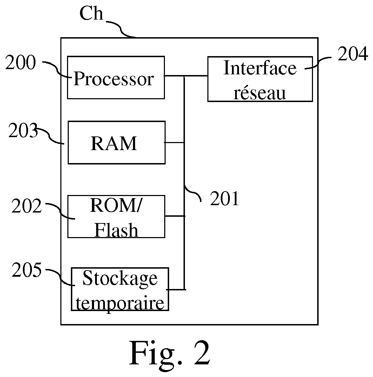

La Fig. 2 représente un exemple d'architecture d'un dispositif de gestion de configurations logicielles d'équipements d'un aéronef selon la présente invention.

Le dispositif de gestion de configurations logicielles Ch comprend :
- un processeur, micro-processeur, ou microcontrôleur, un FGPA 200 ;
- une mémoire volatile 203 ;
- une mémoire non volatile 202 ;
- optionnellement un dispositif de stockage temporaire 205 (disque dur, flash disque, carte SD, stick USB, mémoire FLASH interne ...)
- une interface réseau 204 permettant la transmission de fichiers sur un lien radio ou filaire;
- un bus de communication 201 reliant le processeur 200 à la mémoire ROM 202, à la mémoire RAM 203, au moyen de stockage temporaire Hd et à l'interface réseau 204.

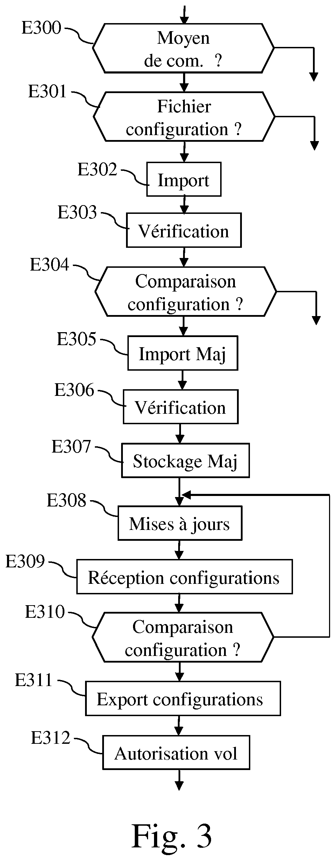

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque dispositif de gestion de configurations logicielles Ch est mis sous tension, le processeur 200 est capable de lire de la mémoire volatile 203 des instructions et de les exécuter. Ces instructions forment un programme d'ordinateur qui cause la mise en oeuvre, par le processeur 300, de tout ou partie du procédé décrit en relation avec la Fig. 3.

Tout ou partie du procédé décrit en relation avec la Fig. 3 peut être implémenté sous forme logicielle par exécution d'un ensemble d'instructions par une machine programmable, telle qu'un processeur, micro-processeur, un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Fig. 3 représente un exemple d'algorithme exécuté par le dispositif de gestion de configurations logicielles d'équipements d'un aéronef selon la présente invention.

Le présent algorithme est décrit dans un exemple dans lequel il est exécuté par le processeur 200 du dispositif de gestion de configurations logicielles d'équipements d'un aéronef.

A l'étape E300, le processeur 200 détecte qu'un lien de communication en entre un serveur au sol et l'aéronef est disponible.

A l'étape E301, le processeur 200 vérifie si un fichier de configuration est disponible sur un dispositif informatique communiquant au sol, tel qu'un serveur informatique des services techniques et de maintenance de l'exploitant de l'aéronef.

Dans l'affirmative, le processeur 200 passe à l'étape E302. Dans la négative, le processeur 200 interrompt le présent algorithme.

A l'étape E302, le processeur 200 commande l'import, par l'intermédiaire de l'interface réseau 204, du fichier de configuration Conf.

Le fichier de configuration Conf répertorie tous les identifiants des équipements C1 à CN de l'aéronef Ae qui doivent être mis à jour, la version de la mise à jour ou les versions des mises à jour devant être effectuée pour les équipements C1 à CN, des informations représentatives de la compatibilité entre les versions des mises à jours de tous les équipements C1 à CN de l'aéronef Ae, la date à partir de laquelle la mise à jour pourra être effectuée et éventuellement la liste des lieux où le transfert des mises à jour pourra être effectué, la qualité du lien de communication entre le lieu de la mise à jour et l'aéronef, le coût de la communication pour chaque lieu où le transfert des mises à jour pourra être effectué. Le fichier de configuration Conf est par exemple généré par le fournisseur d'un ou plusieurs équipements ou de logiciels de l'aéronef Ae et/ou du fournisseur de l'aéronef et/ou de l'exploitant de l'aéronef et/ou le responsable de la maintenance de l'aéronef, sur tout ou seulement un ensemble préalablement défini des équipements

Il est à remarquer ici que dans un mode de réalisation particulier, plusieurs fichiers de configurations sont créés de manière à classifier les mises à jour des équipements de l'aéronef selon des critères prédéfinis comme par exemple le niveau de criticité des équipements vis-à-vis de la sécurité.

Le ou les fichiers de configuration sont par exemple générés par selon un calendrier de maintenance des équipements de l'aéronef. Le ou chaque fichier de configuration comporte par exemple une signature numérique garantissant l'intégrité, l'authenticité et la provenance des données du fournisseur d'un ou plusieurs équipements ou d'au moins un logiciel de l'aéronef Ae et/ou du fournisseur de l'aéronef et/ou de l'exploitant de l'aéronef et/ou du responsable de la maintenance de l'Aéronef, sur tout ou seulement un ensemble préalablement défini des équipements.

A l'étape E303, le processeur 200 vérifie si la signature numérique garantissant l'intégrité, l'authenticité et la provenance des données comprise dans le fichier de configuration téléchargé correspond à celle de l'entité qui a autorisation pour générer et demander l'installation d'une mise à jour logicielle identifiée dans le fichier de configuration.

Dans l'affirmative, le processeur 200 passe à l'étape E304 et compare, pour chaque équipement comportant un logiciel identifié dans le fichier de configuration téléchargé, la version de 1a mise à jour comprise dans le fichier de configuration avec la version du logiciel actuellement installée dans l'équipement.

Si au moins une version de mise à jour comprise dans le fichier de configuration est différente d'une version du logiciel actuellement installée dans un équipement, le processeur 200 passe à l'étape E305.

Dans 1a négative, le processeur 200 interrompt le présent algorithme.

A l'étape E305, le processeur 200 programme un import de la mise à jour logicielle.

La programmation de la mise à jour dépend de la date comprise dans le fichier de configuration et/ou du lieu où lequel l'aéronef se trouve et/ou de la qualité du lien de communication entre le lieu de la mise à jour et l'aéronef et/ou du coût de la communication au lieu auquel l'aéronef se trouve.

Lorsque que les conditions liées à la programmation de la mise à jour sont remplies, le processeur 200 procède à l'import du ou des logiciels de mise à jour. Le ou les logiciels de mise à jour sont importés de la base de données Lo qui comporte les fichiers de mise à jour logicielle des équipements.

La base de données Lo comporte les fichiers de mise à jour logicielle des équipements. Chaque mise à jour logicielle est par exemple signée par le fournisseur de l'équipement comportant un logiciel pour lequel la mise à jour doit être effectuée.

A l'étape E306, le processeur 200 vérifie si la signature numérique garantissant l'intégrité, l'authenticité et la provenance des données de chaque mise à jour correspond à celle de l'entité qui a autorisation pour générer et demander l'installation d'une mise à jour logicielle et lorsque la vérification est positive, le processeur 200 passe à l'étape E307 et commande la mémorisation du ou des fichiers téléchargés dans les moyens de stockage temporaires Hd.

A l'étape E308, le processeur 200 procède ensuite au téléchargement de chaque mise à jour dans l'équipement comportant un logiciel concerné en utilisant le contenu de la table d'adressage Ta.

La table d'adressage Ta comprend les informations identifiant chaque équipement comportant un logiciel de l'aéronef et l'adresse de chaque équipement comportant un logiciel de l'aéronef, qui est susceptible d'être mis à jour. La table d'adressage comprend optionnellement, pour chaque équipement et/ou logiciel, une information indiquant si une signature numérique garantissant l'intégrité, l'authenticité et la provenance des données est nécessaire pour la mise à jour logicielle de l'équipement. Si une signature numérique garantissant l'intégrité, l'authenticité et la provenance des données est nécessaire pour la mise à jour logicielle de l'équipement, la table d'adressage Ta comprend les identifiants des entités qui ont la possibilité de fournir une mise à jour logicielle. Ces entités pourraient être le fournisseur de l'équipement comportant un logiciel ou des tiers, si ceux-ci sont autorisés à effectuer une mise à jour logicielle sur ce calculateur.

La table d'adressage Ta comprend des informations indiquant le ou les états de fonctionnement de chaque équipement comportant un logiciel dans lequel ou lesquels une mise à jour logicielle peut être effectuée. L'état est par exemple un état lié à la situation de l'aéronef, telle que par exemple, une phase de vol, ou de présence au sol. L'état de fonctionnement est par exemple le fait que les moteurs soient à l'arrêt ou non.

La table d'adressage Ta est par exemple générée au sol et installée lors de la maintenance de l'aéronef Ae ou est créée dynamiquement par le dispositif de gestion de configurations logicielles Ch. Par exemple, le dispositif de gestion de configurations logicielles Ch diffuse un message de découverte à destination de tous les équipements de l'aéronef.

Chaque équipement comportant un logiciel qui est susceptible d'être mis à jour, recevant le message de découverte, émet en réponse un message au dispositif de gestion de configurations logicielles Ch. Le message émis en réponse comprend des informations l'identifiant et l'adresse de l'équipement comportant un logiciel ou des logiciels de l'aéronef, une information indiquant si une signature numérique garantissant l'intégrité, l'authenticité et la provenance des données est nécessaire pour la mise à jour logicielle de l'équipement. Si une signature numérique garantissant l'intégrité, l'authenticité et la provenance des données est nécessaire pour la mise à jour logicielle de l'équipement, le message émis en réponse comprend les identifiants des entités qui ont la possibilité de fournir une mise à jour logicielle. Ces entités pourraient être le fournisseur de l'équipement comportant un logiciel ou des tiers, si ceux-ci sont autorisés à effectuer une mise à jour logicielle sur ce calculateur.

Le message émis en réponse comprend aussi l'état ou les états dans lesquels l'équipement comportant un logiciel doit être lors d'une mise à jour logicielle.

Selon un mode particulier de la présente invention, la table d'adressage Ta comporte des informations prédéfinies qui sont utilisées en cas d'incapacité d'un équipement comportant un logiciel à traiter un message de découverte, ou à fournir dans le message de réponse toutes les informations cités ci-dessus.

Chaque équipement vérifie si la mise à jour lui est effectivement destinée et procède à l'installation de la mise à jour logicielle si l'équipement est dans un état de fonctionnement qui permet l'installation de la mise à jour.

Lorsque la mise à jour logicielle est effectuée, l'équipement ayant fait la mise à jour transfère un message au dispositif de gestion de configurations logicielles Ch lui indiquant la version de mise à jour installée. Chaque message est reçu à l'étape E309.

A l'étape E310, le processeur 200 vérifie si chaque équipement identifié dans le fichier de configuration Conf a installé la version de la mise à jour comprise dans le fichier de configuration Conf.

Dans l'affirmative, le processeur 200 passe à l'étape E311. Dans la négative, le processeur 200 retourne à l'étape E308.

A l'étape E311, le processeur 200 commande le transfert au sol sur un serveur de la version logicielle de chaque équipement.

A l'étape E312, le processeur 200 vérifie si toutes les mises à jour sont compatibles entre elles et en accord avec le contenu du fichier de configuration, et dans l'affirmative, le dispositif de gestion de configurations logicielles Ch détermine que l'aéronef Ae peut être autorisé à voler.

Il est à remarquer ici que la détermination que l'aéronef Ae peut être autorisé à voler pourra être faite au sol aussi, étant donné que le dispositif de gestion de configurations logicielles Ch y a transféré la version logicielle de chaque équipement.

De même, l'autorisation de vol pourra être validée par un opérateur de maintenance, à bord ou au sol.

## Revendications

1. Procédé de gestion de configurations logicielles d'équipements d'un aéronef l'aéronef comporte un dispositif de gestion de configurations logicielles d'équipements de l'aéronef, **caractérisé en ce que** le procédé comporte les étapes exécutées par le dispositif de gestion de configurations logicielles d'équipements de l'aéronef de :
- détection (E300) de la disponibilité d'un lien de communication entre un serveur au sol et l'aéronef,
- vérification (E301), lorsqu'un lien de communication est disponible, si un fichier de configuration est disponible sur le serveur et import du fichier de configuration si le fichier de configuration est disponible, le fichier de configuration comportant des informations représentatives de la compatibilité entre les versions des mises à jour de tous les équipements de l'aéronef, et/ou la liste des lieux où l'import de la au moins une mise à jour pourra être effectué et/ou la qualité du lien de communication entre le lieu de la mise à jour et l'aéronef et/ou le coût de la communication pour chaque lieu où le transfert des mises à jour pourra être effectué,
- programmation (E305), lorsque le fichier de configuration est disponible et à partir du fichier de configuration, de l'import de la au moins une mise à jour logicielle, la programmation de l'import de la mise à jour dépendant de la date comprise dans le fichier de configuration et du lieu dans lequel l'aéronef se trouve et de la qualité du lien de communication entre le lieu de la mise à jour et l'aéronef et du coût de la communication au lieu auquel l'aéronef se trouve,
- import (E305), selon la programmation, depuis le serveur au sol d'une ou plusieurs mises à jour logicielles identifiées dans le fichier de configuration et mémorisation de la ou les mises à jour logicielles dans un espace de mémorisation temporaire,
- commande de la modification de la configuration logicielle du ou des équipements avec la ou les mises à jour logicielles correspondant à ou aux équipements.

2. Procédé selon la revendication 1, **caractérisé en ce que** le fichier de configuration comporte une signature numérique garantissant l'intégrité, l'authenticité et la provenance des données, des identifiants des équipements de l'aéronef qui doivent être mis à jour, la version de la mise à jour devant être effectuée pour les équipements et la date à la laquelle 1a mise à jour peut être effectuée.

3. Procédé selon la revendication 2, **caractérisé en ce que** le procédé comporte en outre les étape de vérification si toutes les mises à jours sont compatibles entre elles et en accord avec le contenu du fichier de configuration, et dans l'affirmative de détermination que l'aéronef peut être autorisé à voler.

4. Procédé selon l'une quelconque des revendications 1 à 3, **caractérisé en ce que** le fichier de configuration est généré par un fournisseur d'équipements ou de logiciels et/ou par un fournisseur de l'aéronef et/ou par un exploitant de l'aéronef et/ou par un responsable de la maintenance de l'aéronef, sur tout ou seulement un ensemble préalablement défini des équipements.

5. Procédé selon l'une quelconque des revendications précédentes, **caractérisé en ce que** la commande de la modification de la configuration logicielle du ou des équipements avec la ou les mises à jour logicielles correspondant à ou aux équipements est effectuée à partir d'une table d'adressage (Ta) comprenant des informations identifiant chaque équipement et une adresse de chaque équipement comportant un logiciel pour chaque équipement, une information indiquant si une signature numérique garantissant l'intégrité, l'authenticité et la provenance des données est nécessaire pour la mise à jour logicielle de l'équipement.

6. Procédé selon la revendication 5, **caractérisé en ce que** si une signature numérique garantissant l'intégrité, l'authenticité et la provenance des données est nécessaire pour la mise à jour logicielle de l'équipement, la table d'adressage identifie la ou les entités ayant l'autorisation de fournir une ou des mises à jour logicielle.

7. Procédé selon l'une quelconque des revendications 1, 5 à 6, **caractérisé en ce que** la table comprend des informations indiquant le ou les états de fonctionnement de chaque équipement ou de l'aéronef dans lequel ou lesquels une mise à jour logicielle peut être effectuée.

8. Procédé selon l'une quelconque des revendications 5 à 7, **caractérisé en ce que** la table d'adressage est installée dans l'aéronef lors de la maintenance de l'aéronef.

9. Procédé selon l'une quelconque des revendications 5 à 7, **caractérisé en ce que** la table d'adressage est créée par le dispositif de gestion de configurations logicielles en diffusant un message de découverte à destination de tous les équipements de l'aéronef et à partir de l'analyse de messages reçus d'équipements en réponse au message de découverte et/ou en utilisant des valeurs par défaut en cas de non réponse ou de réponse partielle d'au moins un équipement de l'aéronef.

10. Dispositif de gestion de configurations logicielles d'équipements d'un aéronef, le dispositif de gestion de configurations logicielles d'équipements de l'aéronef étant compris dans l'aéronef et **caractérisé en ce qu'**il comporte :
- des moyens de détection de la disponibilité d'un lien de communication entre un serveur au sol et l'aéronef,
- des moyens de vérification, lorsqu'un lien de communication est disponible, si un fichier de configuration est disponible sur le serveur et d'import du fichier de configuration si le fichier de configuration est disponible, le fichier de configuration comportant des informations représentatives de la compatibilité entre les versions des mises à jour de tous les équipements de l'aéronef, et/ou la liste des lieux où l'import de la au moins une mise à jour pourra être effectué et/ou la qualité du lien de communication entre le lieu de la mise à jour et l'aéronef et/ou le coût de la communication pour chaque lieu où le transfert des mises à jour pourra être effectué,
- des moyens de programmation, lorsque le fichier de configuration est disponible et à partir du fichier de configuration, de l'import de la au moins une mise à jour logicielle,_1a programmation de l'import de la mise à jour dépendant de la date comprise dans le fichier de configuration et du lieu dans lequel l'aéronef se trouve et de la qualité du lien de communication entre le lieu de la mise à jour et l'aéronef et du coût de la communication au lieu auquel l'aéronef se trouve,
- des moyens d'import, selon la programmation, depuis le serveur au sol d'une ou plusieurs mises à jour logicielles identifiées dans le fichier de configuration et mémorisation de la ou les mises à jour logicielles dans un espace de mémorisation temporaire,
- des moyens de commande de la modification de la configuration logicielle du ou des équipements avec la ou les mises à jour logicielles correspondant à ou aux équipements.

11. Programme d' ordinateur stocké sur un support d'informations, ledit programme comportant des instructions permettant de mettre en oeuvre le procédé selon l'une quelconque des revendications 1 à 9, lorsqu'il est chargé et exécuté par un système informatique.

12. Moyens de stockage, **caractérisés en ce qu'**ils stockent un programme d'ordinateur comprenant des instructions pour mettre en oeuvre, par un dispositif, le procédé selon l'une quelconque des revendications 1 à 9, lorsque ledit programme est exécuté par un processeur dudit dispositif.

## Patentansprüche

1. Verfahren zur Verwaltung von Softwarekonfigurationen von Ausrüstungen eines Luftfahrzeugs, wobei das Luftfahrzeug eine Vorrichtung zur Verwaltung von Softwarekonfigurationen von Ausrüstungen des Luftfahrzeugs aufweist, **dadurch gekennzeichnet, dass** das Verfahren die folgenden von der Vorrichtung zur Verwaltung von Softwarekonfigurationen von Ausrüstungen des Luftfahrzeugs ausgeführten Schritte aufweist:
- Erkennung (E300) der Verfügbarkeit einer Kommunikationsverbindung zwischen einem Server am Boden und dem Luftfahrzeug,
- Überprüfung (E301), wenn eine Kommunikationsverbindung verfügbar ist, ob eine Konfigurationsdatei auf dem Server verfügbar ist, und Importieren der Konfigurationsdatei, wenn die Konfigurationsdatei verfügbar ist, wobei die Konfigurationsdatei repräsentative Informationen für die Kompatibilität zwischen den Versionen der Aktualisierungen aller Ausrüstungen des Luftfahrzeugs und/oder die Liste der Orte, wo der Import der mindestens einen Aktualisierung ausgeführt werden kann, und/oder die Qualität der Kommunikationsverbindung zwischen dem Ort der Aktualisierung und dem Luftfahrzeug und/oder die Kosten der Kommunikation für jeden Ort aufweist, wo die Übertragung der Aktualisierungen ausgeführt werden kann,
- Programmierung (E305), wenn die Konfigurationsdatei verfügbar ist und ausgehend von der Konfigurationsdatei, des Imports der mindestens einen Softwareaktualisierung, wobei die Programmierung des Imports der Aktualisierung vom in der Konfigurationsdatei enthaltenen Datum und von dem Ort, an dem das Luftfahrzeug sich befindet, und von der Qualität der Kommunikationsverbindung zwischen dem Ort der Aktualisierung und dem Luftfahrzeug und den Kosten der Kommunikation an dem Ort abhängt, an dem sich das Luftfahrzeug befindet,
- Import (E305), gemäß der Programmierung, ausgehend vom Server am Boden einer oder mehrerer in der Konfigurationsdatei identifizierter Softwareaktualisierungen und Speichern der Softwareaktualisierung(en) in einem temporären Speicherraum,
- Steuern der Änderung der Softwarekonfiguration der Ausrüstung(en) mit der oder den Softwareaktualisierungen entsprechend der oder den Ausrüstungen.

2. Verfahren nach Anspruch 1, **dadurch gekennzeichnet, dass** die Konfigurationsdatei eine digitale Signatur, die die Integrität, die Authentizität und die Herkunft der Daten garantiert, Kennungen der Ausrüstungen des Luftfahrzeugs, die aktualisiert werden sollen, die Version der Aktualisierung, die für die Ausrüstungen ausgeführt werden soll, und das Datum aufweist, an dem die Aktualisierung ausgeführt werden kann.

3. Verfahren nach Anspruch 2, **dadurch gekennzeichnet, dass** das Verfahren außerdem die Schritte der Überprüfung, ob alle Aktualisierungen miteinander kompatibel sind und mit dem Inhalt der Konfigurationsdatei übereinstimmen, und wenn ja, der Bestimmung aufweist, dass das Luftfahrzeug berechtigt werden kann zu fliegen.

4. Verfahren nach einem der Ansprüche 1 bis 3, **dadurch gekennzeichnet, dass** die Konfigurationsdatei von einem Lieferanten von Ausrüstungen oder von Software und/oder von einem Lieferanten des Luftfahrzeugs und/oder von einem Betreiber des Luftfahrzeugs und/oder von einem Verantwortlichen für die Wartung des Luftfahrzeugs über alle oder nur eine vorher definierte Einheit der Ausrüstungen generiert wird.

5. Verfahren nach einem der vorhergehenden Ansprüche, **dadurch gekennzeichnet, dass** die Steuerung der Änderung der Softwarekonfiguration der Ausrüstung oder der Ausrüstungen mit der oder den Softwareaktualisierung(en) entsprechend der oder den Ausrüstungen ausgehend von einer Ansteuerungstabelle (Ta) ausgeführt wird, die jede Ausrüstung identifizierende Informationen und eine Adresse jeder Ausrüstung enthält, die eine Software für jede Ausrüstung aufweist, wobei eine Information anzeigt, ob eine digitale Signatur, die die Integrität, die Authentizität und die Herkunft der Daten garantiert, für die Softwareaktualisierung der Ausrüstung notwendig ist.

6. Verfahren nach Anspruch 5, **dadurch gekennzeichnet, dass**, wenn eine die Integrität, die Authentizität und die Herkunft der Daten garantierende digitale Signatur für die Softwareaktualisierung der Ausrüstung notwendig ist, die Ansteuerungstabelle die Entität oder die Entitäten identifiziert, die die Berechtigung haben, eine Softwareaktualisierung oder Softwareaktualisierungen zu liefern.

7. Verfahren nach einem der Ansprüche 1, 5 bis 6, **dadurch gekennzeichnet, dass** die Tabelle Informationen enthält, die den Betriebszustand oder die Betriebszustände jeder Ausrüstung oder des Luftfahrzeugs anzeigen, in dem oder denen eine Softwareaktualisierung ausgeführt werden kann.

8. Verfahren nach einem der Ansprüche 5 bis 7, **dadurch gekennzeichnet, dass** die Ansteuerungstabelle bei der Wartung des Luftfahrzeugs im Luftfahrzeug installiert wird.

9. Verfahren nach einem der Ansprüche 5 bis 7, **dadurch gekennzeichnet, dass** die Ansteuerungstabelle von der Verwaltungsvorrichtung von Softwarekonfigurationen erzeugt wird, indem eine Discovery-Nachricht an alle Ausrüstungen des Luftfahrzeugs und ausgehend von der Analyse von von Ausrüstungen als Antwort auf die Discovery-Nachricht empfangenen Nachrichten verteilt wird und/oder indem im Fall eine Nichtbeantwortung oder einer Teilantwort von mindestens einer Ausrüstung des Luftfahrzeugs Standardwerte verwendet werden.

10. Vorrichtung zur Verwaltung von Softwarekonfigurationen von Ausrüstungen eines Luftfahrzeugs, wobei die Verwaltungsvorrichtung von Softwarekonfigurationen von Ausrüstungen des Luftfahrzeugs im Luftfahrzeug enthalten und **dadurch gekennzeichnet ist, dass** sie aufweist:
- Einrichtungen zur Erkennung der Verfügbarkeit einer Kommunikationsverbindung zwischen einem Server am Boden und dem Luftfahrzeug,
- Einrichtungen zur Überprüfung, wenn eine Kommunikationsverbindung verfügbar ist, ob eine Konfigurationsdatei auf dem Server verfügbar ist, und zum Importieren der Konfigurationsdatei, wenn die Konfigurationsdatei verfügbar ist, wobei die Konfigurationsdatei repräsentative Informationen für die Kompatibilität zwischen den Versionen der Aktualisierungen aller Ausrüstungen des Luftfahrzeugs und/oder die Liste der Orte, wo der Import der mindestens einen Aktualisierung ausgeführt werden kann und/oder die Qualität der Kommunikationsverbindung zwischen dem Ort der Aktualisierung und dem Luftfahrzeug und/oder die Kosten der Kommunikation für jeden Ort aufweist, wo die Übertragung der Aktualisierungen ausgeführt werden kann,
- Einrichtungen zur Programmierung, wenn die Konfigurationsdatei verfügbar ist und ausgehend von der Konfigurationsdatei, des Imports der mindestens einen Softwareaktualisierung, wobei die Programmierung des Imports der Aktualisierung vom in der Konfigurationsdatei enthaltenen Datum und von dem Ort, an dem das Luftfahrzeug sich befindet, und von der Qualität der Kommunikationsverbindung zwischen dem Ort der Aktualisierung und dem Luftfahrzeug und den Kosten der Kommunikation an dem Ort abhängt, an dem sich das Luftfahrzeug befindet,
- Einrichtungen zum Importieren, gemäß der Programmierung, ausgehend vom Server am Boden einer oder mehrerer in der Konfigurationsdatei identifizierter Softwareaktualisierungen und Speichern der Softwareaktualisierung(en) in einem temporären Speicherraum,
- Einrichtungen zum Steuern der Änderung der Softwarekonfiguration der Ausrüstung(en) mit der oder den Softwareaktualisierungen entsprechend der oder den Ausrüstungen.

11. Auf einem Informationsträger gespeichertes Computerprogramm, wobei das Programm Anweisungen enthält, die es ermöglichen, das Verfahren nach einem der Ansprüche 1 bis 9 durchzuführen, wenn es von einem EDV-System geladen und ausgeführt wird.

12. Speichereinrichtungen, **dadurch gekennzeichnet, dass** sie ein Computerprogramm speichern, das Anweisungen enthält, um durch eine Vorrichtung das Verfahren nach einem der Ansprüche 1 bis 9 durchzuführen, wenn das Programm von einem Prozessor der Vorrichtung ausgeführt wird.

## Claims

1. Method for managing aircraft equipment software configurations, the aircraft comprises a device for managing aircraft equipment software configurations, **characterised in that** the method comprises the steps, performed by the device for managing aircraft equipment software configurations, of:
- detecting (E300) the availability of a communication link between a server on the ground and the aircraft,
- checking (E301), when a communication link is available, whether a configuration file is available on the server and importing the configuration file if the configuration file is available, the configuration file comprising information representing the compatibility between the versions of updates of all the equipment of the aircraft, and/or the list of the places where the importing of the at least one update can be done and/or the quality of the communication link between the place of updating and the aircraft and/or the cost of the communication for each place where the transfer of updates can be done,
- programming (E305), when the configuration file is available and from the configuration file, the importing of the at least one software update, the programming of the importing of the update depending on the time included in the configuration file and on the place in which the aircraft is situated and on the quality of the communication link between the place of update and the aircraft and on the cost of the communication at the place at which the aircraft is located,
- importing (E305), according to the programming, from the server on the ground, one or more software updates identified in the configuration file and storing the software update or updates in a temporary storage space,
- demanding the modification of the software configuration of the item or items of equipment with the software update or updates corresponding to the item or items of equipment.

2. Method according to claim 1, **characterised in that** the configuration file comprises a digital signal guaranteeing the integrity, the authenticity and the provenance of the data, identifiers of the aircraft equipment that must be updated, the version of the update that is to be performed for the equipment and the date at which the update can be performed.

3. Method according to claim 2, **characterised in that** the method further comprises the steps of checking whether all the updates are compatible with each other and in agreement with the content of the configuration file, and if so determining that the aircraft can be authorised to fly.

4. Method according to any one of claims 1 to 3, **characterised in that** the configuration file is generated by an equipment or software supplier and/or by a supplier of the aircraft and/or by an operator of the aircraft and/or by an aircraft maintenance manager, on all or only a previously defined set of the equipment.

5. Method according to any one of the preceding claims, **characterised in that** the modification of the software configuration of the item or items of equipment with the software update or updates corresponding to the item or items of equipment is demanded from an addressing table (Ta) comprising information identifying each item of equipment and an address of each item of equipment comprising software for each item of equipment, information indicating whether a digital signal guaranteeing the integrity, the authenticity and the provenance of the data is necessary for the software updating of the equipment.

6. Method according to claim 5, **characterised in that**, if a digital signal guaranteeing the integrity, the authenticity and the provenance of the data is necessary for the software updating of the equipment; the addressing table identifies the entity or entities having the authorisation to provide one or more software updates.

7. Method according to any one of claims 1, 5 to 6, **characterised in that** the table comprises information indicating the operating state or states of each item of equipment or of the aircraft wherein a software update can be performed.

8. Method according to any one of claims 5 to 7, **characterised in that** the addressing table is installed in the aircraft when the aircraft is maintained.

9. Method according to any one of claims 5 to 7, **characterised in that** the addressing table is created by the software configuration management device by broadcasting a discovery message to all the equipment on the aircraft and from the analysis of messages received from equipment in response to the discovery message and/or using default values in the case of non-response or partial response from at least one item of equipment of the aircraft.

10. Device for managing aircraft equipment software configurations, the device for managing aircraft equipment software configurations being included in the aircraft and **characterised in that** comprises:
- means for detecting the availability of a communication link between a server on the ground and the aircraft,
means for checking, when a communication link is available, whether a configuration file is available on the server and for importing the configuration file if the configuration file is available, the configuration file comprising information representing the compatibility between the versions of updates of all the equipment of the aircraft, and/or the list of the places where the importing of the at least one update can be done and/or the quality of the communication link between the place of updating and the aircraft and/or the cost of the communication for each place where the transfer of updates can be done,
- means for programming, when the configuration file is available and from the configuration file, the importing of the at least one software update, the programming of the importing of the update depending on the time included in the configuration file and on the place in which the aircraft is located and on the quality of the communication link between the place of update and the aircraft and on the cost of the communication at the place at which the aircraft is located,
- means for importing, according to the programming, from the server on the ground, one or more software updates identified in the configuration file or files and storing the software update or updates in a temporary memory space,
- means for demanding the modification of the software configuration of the item or items of equipment with the software update or updates corresponding to the equipment.

11. Computer program stored on an information medium, said program comprising instructions for implementing the method according to any one of claims 1 to 9 when it is loaded into and executed by a computer system.

12. Storage means, **characterised in that** they store a computer program comprising instructions for implementing, by a device, the method according to any one of claims 1 to 9, when said program is executed by a processor of said device.
